# EUROPEAN PATENT APPLICATION

(11) **EP 2 372 995 A1**
(43) Date of publication of application: **05.10.2011**
(21) Application number: 09837323.6
(22) Date of filing: 22.09.2009
(51) Int. Cl.: H04N 1/00

(54) **TRAINING METHOD AND APPARATUS FOR IP FACSIMILE MACHINE**

(30) Priority: 29.12.2008 CN 200810246898
(71) Applicant: ZTE Corporation, Shenzhen, Guangdong 518057 (CN)
(72) Inventor: SHU, Chang, Guangdong 518057 (CN)
(74) Representative: Tomlinson, Kerry John
(86) International application number: PCT/CN2009/074111
(87) International publication number: WO 2010/078766

(57) **Abstract**

The present invention discloses a method for training an IP facsimile apparatus, and the method includes the following steps: when receiving a training indication message, a gateway of a facsimile apparatus of a receiving party judging a current training mode of the facsimile apparatus of the receiving party, if it is judged to be a local training mode, performing a local training; if it is judged to be a remote training mode, performing a remote training when a training signal message is received, searching for a training signal message of a last time when the training signal message is not received, if the training signal message of the last time is found, performing the remote training, if the training signal message of the last time is not found, performing the local training.

## Description

### Field of the Invention

The present invention relates to a method and a device for training a facsimile apparatus, in particular to a method and a device for training an IP facsimile apparatus.

### Background of the Invention

With the development of the Internet, a T.38 protocol for performing a real-time facsimile relay in an IP network is used more and more. Generally, a T.38 gateway at one end demodulates a modulating signal from a facsimile apparatus which is connected with the T.38 gateway, encapsulates the demodulated data into a message which accords with the regulations of the T.38 protocol, and sends the message to the T.38 gateway at the opposite end through the IP network. The T.38 gateway at the opposite end analyzes the received message to obtain the data, modulates the data, and then sends the modulated data to the facsimile apparatus which is connected with the T.38 gateway at the opposite end.

The IP facsimile process is briefly introduced as follows. Firstly, a call establishment stage is performed, wherein the calling is performed through a manual mode or an automatic mode, which is consistent with the calling process of an IP telephone. After the call establishment is completed, a voice communication can be performed, the calling party can manually press the start key of the facsimile apparatus to send a facsimile single tone signal to the called party, and then a beep can be heard by the called party. Secondly, a facsimile apparatus capability negotiation and handshaking stage, in which an actual facsimile stage is entered, is performed, and facsimile apparatus capability identification, facsimile training, synchronization and the like are performed in this stage. In the above, the facsimile apparatus of the called party sends a digital identification signal to identify the capability. Thirdly, a message synchronization and transmission stage is performed, wherein message synchronization, error code detection and error correction and line monitoring are performed. At the same time, a document is transmitted according to the regulations of the T.4 protocol, wherein the transmission is performed in accordance with the regulations of modulation mode, transmission time, transmission mode and the like defined by the T.4. Fourthly, a message confirmation stage is performed, wherein message confirmation, continuous transmission of multi-page document and transmission of facsimile ending signal are mainly performed. Fifthly, a releasing stage of facsimile calling is performed, wherein the call is released according to the facsimile ending signal or the network factors of time-out and the like.

At present, most of media gateways with a T.38 relay function have two modes for the facsimile training in the negotiation stage between the facsimile apparatus which respectively are a local training mode and a remote training mode. Under the local training mode, the gateway of the facsimile apparatus of the sending party does not forward any training data to the gateway of the facsimile apparatus of the receiving party, and just sends a T.38 message with a training indication; after receiving the training indication, the gateway of the facsimile apparatus of the receiving party generates the training data according to the modulation mode of the training indication by using a cheating manner, and sends the generated training data to the facsimile apparatus of the receiving party. Under the remote training mode, the gateway of the facsimile apparatus of the sending party sends both the training indication message and the training data (all-zero data lasting for about 1.5 seconds) demodulated from the facsimile apparatus of the sending party; and the job of the gateway of the facsimile apparatus of the receiving party is to send the received training data to the facsimile apparatus of the receiving party.

Thus, in one facsimile, the gateway of the facsimile apparatus of the sending party and the gateway of the facsimile apparatus of the receiving party have four kinds of configuration for the training mode, that is, remote-remote, local-local, remote-local and local-remote. The gateways of both parties under the first two kinds of combination can smoothly perform the training process, while the gateways of both parties under the other two kinds of combination will encounter the problem of the configuration compatibility. In the above, under the configuration of remote-local, the gateway of the facsimile apparatus of the receiving party will receive an unexpected T.38 training data message which may cause disorder; while under the configuration of local-remote, the gateway of the facsimile apparatus of the receiving party will expect a T.38 training data message, but can not receive the message, which, of course, will cause the failure of the training.

### Summary of the Present Invention

Therefore, the present invention mainly aims at providing a method and a device for training an IP facsimile apparatus, which is compatible with the configuration of various training modes, and ensures the smooth transmission of the facsimile documents between IP facsimile apparatuses.

To achieve the above object, the present invention provides a method for training an IP facsimile apparatus, and the method comprises:
when receiving a training indication message, a gateway of a facsimile apparatus of a receiving party judging a current training mode of the facsimile apparatus of the receiving party, if it is judged to be a local training mode, performing a local training; if it is judged to be a remote training mode, performing a remote training when a training signal message is received, searching for a training signal message of a last time when the training signal message is not received, if the training signal message of the last time is found, performing the remote training, if the training signal message of the last time is not found, performing the local training.

Preferably, the step of performing the local training if the training signal message of the last time is not found comprises: switching the facsimile apparatus of the receiving party to the local training mode, generating, when receiving a training indication message of a next time, a training signal according to the training indication message, sending the training signal to the facsimile apparatus of the receiving party, and the facsimile apparatus of the receiving party performing the local training according to the training signal.

Preferably, when the facsimile apparatus of the receiving party is in the local training mode, the gateway of the facsimile apparatus of the receiving party discards the received training signal message.

Preferably, when a facsimile apparatus of a sending party is in the local training mode, the facsimile apparatus of the sending party only sends a training indication message to the gateway of the facsimile apparatus of the receiving party through a gateway of the facsimile apparatus of the sending party, and does not send any training signal message.

Preferably, communication between the gateway of the facsimile apparatus of the receiving party and the gateway of the facsimile apparatus of the sending party is performed based on an IP protocol.

The present invention also provides a device for training an IP facsimile apparatus, and the device comprises:
a training mode judgment unit, configured to judge, when a gateway of a facsimile apparatus of a receiving party receives a training indication message, a current training mode of the facsimile apparatus of the receiving party, trigger a local training unit if it is judged to be a local training mode, and trigger a training signal message judgment unit if it is judged to be a remote training mode;
the local training unit, configured to perform a local training;
the training signal message judgment unit, configured to judge whether the gateway of the facsimile apparatus of the receiving party receives a training signal message, trigger a remote training unit if the training signal message is received, and trigger a searching unit if the training signal message is not received;
the remote training unit, configured to perform a remote training; and
the searching unit, configured to search for a training signal message of a last time, trigger the remote training unit if the training signal message of the last time is found, and trigger the local training unit if the training signal message of the last time is not found.

Preferably, the local training unit performs the local training in the following way: generating a training signal according to the training indication message, sending the training signal to the facsimile apparatus of the receiving party, and the facsimile apparatus of the receiving party performing the local training according to the training signal.

Preferably, when the facsimile apparatus of the receiving party is in the local training mode, the gateway of the facsimile apparatus of the receiving party discards the received training signal message.

Preferably, when a facsimile apparatus of a sending party is in the local training mode, the facsimile apparatus of the sending party only sends a training indication message to the gateway of the facsimile apparatus of the receiving party through a gateway of the facsimile apparatus of the sending party, and does not send any training signal message.

Preferably, communication between the gateway of the facsimile apparatus of the receiving party and the gateway of the facsimile apparatus of the sending party is performed based on an IP protocol.

The present invention configures the flow of the gateway of the facsimile apparatus of the receiving party, so that the gateway of the facsimile apparatus of the receiving party determines, when receiving a training indication message, whether to generate a training signal or to wait for a remote training signal according to the current training mode of the facsimile apparatus of the receiving party, and after the time for the remote training signal expires, the facsimile apparatus of the receiving party switches the remote training mode into the local training mode so as to generate a training signal and make the facsimile apparatus of the receiving party perform the local training when the gateway of the facsimile apparatus of the receiving party receives a remote training indication message of the next time, therefore ensuring the facsimile transmission between the facsimile apparatus of the sending party and the facsimile apparatus of the receiving party. The present invention is compatible with the configuration of various training modes, and ensures the smooth transmission of the facsimile documents between IP facsimile apparatuses.

### Brief Description of the Drawings

The drawings illustrated here provide a further understanding of the present invention and form a part of the present application. The exemplary embodiments and the description thereof are used to explain the present invention without unduly limiting the scope of the present invention, wherein:
Fig. 1 is a flowchart of the method for training the IP facsimile apparatus when the facsimile apparatus of the receiving party is in a local training mode according to an embodiment of the present invention;
Fig.2 is a flowchart of the method for training the IP facsimile apparatus when the facsimile apparatus of the receiving party is in a remote training mode according to an embodiment of the present invention; and
Fig.3 is a schematic diagram of the composition structure of the device for training the IP facsimile apparatus according to an embodiment of the present invention.

### Detailed Description of Embodiments

### General description of functions

The basic idea of the embodiments of the present invention is that: the flow of the gateway of the facsimile apparatus of the receiving party is configured, so that the gateway of the facsimile apparatus of the receiving party determines, when receiving a training indication message, whether to generate a training signal or to wait for a remote training signal according to the current training mode of the facsimile apparatus of the receiving party, and after the time for the remote training signal expires, the facsimile apparatus of the receiving party switches the remote training mode into the local training mode so as to generate a training signal and make the facsimile apparatus of the receiving party perform the local training when the gateway of the facsimile apparatus of the receiving party receives a remote training indication message of the next time, therefore ensuring the facsimile transmission between the facsimile apparatus of the sending party and the facsimile apparatus of the receiving party. The present invention is compatible with the configuration of various training modes, and ensures the smooth transmission of the facsimile documents between IP facsimile apparatuses.

In order to clarify the objects, the technical solutions and the advantages of the present invention, the present invention will be explained in detail to the preferred embodiments as examples with reference to the drawings.

Since the technical solution of the present invention mainly aims at the improvement of the facsimile apparatus capability negotiation and handshaking stage after the call establishment is completed, the whole IP facsimile process will not be detailed, and only the improvement will be described in detail.

### Method embodiment

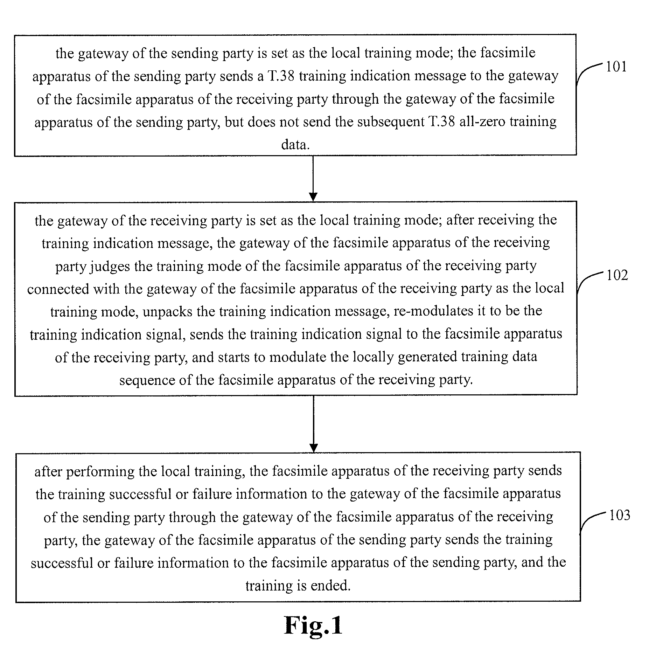

Fig.1 is a flowchart of the method for training the IP facsimile apparatus when the facsimile apparatus of the receiving party is in a local training mode according to an embodiment of the present invention, as shown in Fig.1, the method for training the facsimile apparatus of the receiving party when the facsimile apparatus of the receiving party is an IP facsimile apparatus in the local training mode comprises the steps as follows.

Step 101, the facsimile apparatus of the sending party sends a training indication message to the gateway of the facsimile apparatus of the receiving party through the gateway of the facsimile apparatus of the sending party.

In actual application, the process specifically is that the gateway of the sending party is set as the local training mode; the facsimile apparatus of the sending party sends a T.38 training indication message to the gateway of the facsimile apparatus of the receiving party through the gateway of the facsimile apparatus of the sending party, but does not send the subsequent T.38 all-zero training data.

The facsimile apparatus of the sending party sends the modulation signal of the training indication to the gateway of the facsimile apparatus of the sending party through a pulse code modulation (PCM) bus; after being modulated, the modulated training indication information is processed with IP encapsulation to be a training indication message which is then sent to the gateway of the facsimile apparatus of the receiving party.

In the case that the facsimile apparatus of the sending party is in the remote training mode, after sending the modulation signal of the training indication to the gateway of the facsimile apparatus of the sending party, the facsimile apparatus of the sending party also sends the training data sequence to the gateway of the facsimile apparatus of the sending party through the PCM bus; after the training data sequence is modulated and processed with IP encapsulation, a training signal message is obtained and sent to the gateway of the facsimile apparatus of the receiving party. If the facsimile apparatus of the sending party is in the local training mode, when receiving the training data sequence, the gateway of the facsimile apparatus of the receiving party directly discards the training data sequence.

Step 102, after receiving the training indication message, the gateway of the facsimile apparatus of the receiving party judges the training mode of the facsimile apparatus of the receiving party connected with the gateway of the facsimile apparatus of the receiving party as the local training mode, unpacks the training indication message, re-modulates the unpacked training indication message to be a training indication signal, and sends the training indication signal to the facsimile apparatus of the receiving party, at the same time starts to modulate the generated training data sequence to the facsimile apparatus of the receiving party, wherein the training sequence specifically is the training data sequence generated locally. Herein, the training data sequence is determined according to the training indication information which is mainly used for indicating the duration of the training sequence, and the training data sequence is still an all-zero data sequence. In step 102, the gateway of the receiving party is set as the local training mode.

Under the condition that the training mode of the facsimile apparatus of the receiving party is the local training mode, after receiving the training signal message sequence, the gateway of the facsimile apparatus of the receiving party discards the training signal message.

Step 103, after performing the local training, the facsimile apparatus of the receiving party sends training successful or failure information to the gateway of the facsimile apparatus of the sending party through the gateway of the facsimile apparatus of the receiving party, the gateway of the facsimile apparatus of the sending party sends the training successful or failure information to the facsimile apparatus of the sending party, and the training is ended. In the step, the gateway of the sending party is set as the local training mode.

After completing the local training, the facsimile apparatus of the receiving party sends a training successful confirmation (Confirmation to Receive, CFR)/training failure (Failure to Train, FTT) signal to the gateway of the facsimile apparatus of the receiving party. The gateway of the facsimile apparatus of the receiving party demodulates and performs IP encapsulation to the CFR/FTT signal of the facsimile apparatus of the receiving party to obtain a CFR/FTT message, and sends the CFR/FTT message to the gateway of the facsimile apparatus of the sending party. The gateway of the facsimile apparatus of the sending party then modulates the CFR/FTT message to obtain the CFR/FTT signal, and sends the CFR/FTT signal to the facsimile apparatus of the sending party. So far, one training process is ended.

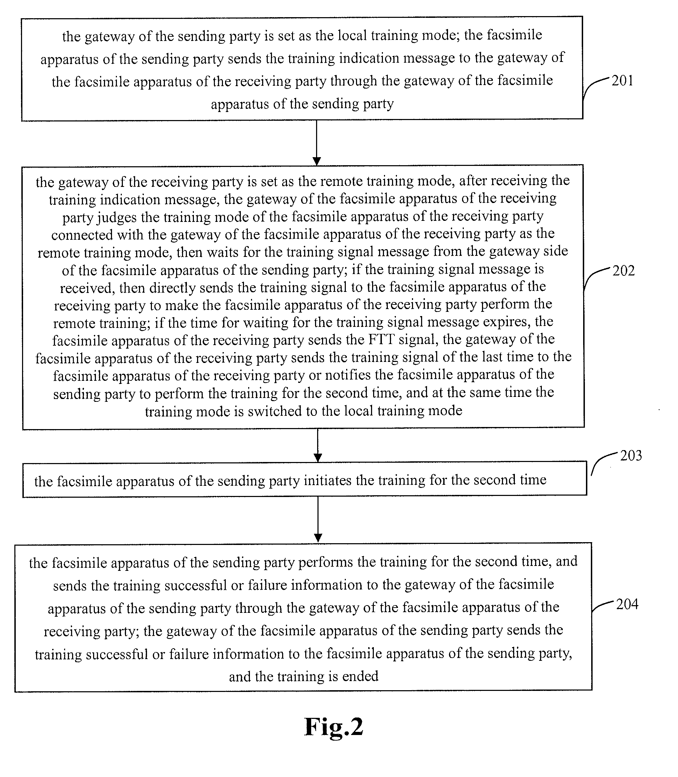

Fig.2 is a flowchart of the method for training the IP facsimile apparatus when the facsimile apparatus of the receiving party is in a remote training mode according to an embodiment of the present invention, as shown in Fig.2, the method for training the facsimile apparatus of the receiving party when the facsimile apparatus of the receiving party is an IP facsimile apparatus in the remote training mode comprises the steps as follows.

Step 201, the facsimile apparatus of the sending party sends a training indication message to the gateway of the facsimile apparatus of the receiving party through the gateway of the facsimile apparatus of the sending party.

The facsimile apparatus of the sending party sends the modulation signal of the training indication to the gateway of the facsimile apparatus of the sending party through a PCM bus; after being modulated, the modulated training indication information is processed with IP encapsulation to be a training indication message which is then sent to the gateway of the facsimile apparatus of the receiving party.

In the case that the facsimile apparatus of the sending party is in the remote training mode, after sending the modulation signal of the training indication to the gateway of the facsimile apparatus of the sending party, the facsimile apparatus of the sending party also sends the training data sequence to the gateway of the facsimile apparatus of the sending party through the PCM bus; after the training data sequence is modulated and processed with IP encapsulation, a training signal message is obtained and sent to the gateway of the facsimile apparatus of the receiving party. If the facsimile apparatus of the sending party is in the local training mode, when receiving the training data sequence, the gateway of the facsimile apparatus of the receiving party directly discards the training data sequence.

Step 202, after receiving the training indication message, the gateway of the facsimile apparatus of the receiving party judges the training mode of the facsimile apparatus of the receiving party connected with the gateway of the facsimile apparatus of the receiving party as the remote training mode, then waits for the training signal message from the gateway side of the facsimile apparatus of the sending party, if the training signal message is received, unpacks the training signal, and sends the unpacked training signal after modulation to the facsimile apparatus of the receiving party, and the facsimile apparatus of the receiving party performs the training according to the training signal; if the time for waiting for the training signal message from the gateway side of the facsimile apparatus of the sending party expires, the facsimile apparatus of the receiving party sends the training failure signal (FTT), the gateway of the facsimile apparatus of the receiving party unpacks and encapsulates the FTT to form an FTT message, and sends the FTT message to the gateway of the facsimile apparatus of the sending party, then the FTT message is modulated to the facsimile apparatus of the sending party. At the same time, after detecting the FTT signal, the gateway of the facsimile apparatus of the receiving party judges whether the training signal from the gateway side of the facsimile apparatus gateway of the sending party is received in the training process of the last time, if no training signal is received in the training process of the last time, the training mode is switched to the local training mode, otherwise the training signal of the last time is sent to the facsimile apparatus of the receiving party so that the facsimile apparatus of the receiving party can be trained.

In step 202, the gateway of the receiving party is set as the remote training mode, after receiving the training indication message, the gateway of the facsimile apparatus of the receiving party judges the training mode of the facsimile apparatus of the receiving party connected with the gateway of the facsimile apparatus of the receiving party as the remote training mode, then waits for the training signal message from the gateway side of the facsimile apparatus of the sending party, if the training signal message is received, then directly sends the training signal to the facsimile apparatus of the receiving party, so that the facsimile apparatus of the receiving party can perform remote training; if the time for waiting for the training signal message expires, the facsimile apparatus of the receiving party sends the FTT signal, the gateway of the facsimile apparatus of the receiving party sends the training signal of the last time to the facsimile apparatus of the receiving party or notifies the facsimile apparatus of the sending party to perform the training for a second time, and at the same time switches the training mode to the local training mode.

Step 203, the facsimile apparatus of the sending party initiates the training for the second time. The initiation manner is completely the same as that in step 201, and the details will not be described herein.

Step 204, the facsimile apparatus of the sending party performs the training for the second time, and sends the training successful or failure information to the gateway of the facsimile apparatus of the sending party through the gateway of the facsimile apparatus of the receiving party; the gateway of the facsimile apparatus of the sending party sends the training successful or failure information to the facsimile apparatus of the sending party, then the training is ended.

After receiving the training indication message, the gateway of the facsimile apparatus of the receiving party unpacks and re-modulates the training indication message to obtain the training indication signal, sends the training indication signal to the facsimile apparatus of the receiving party, and starts to modulate the generated training data sequence to the facsimile apparatus of the receiving party. Herein, the training data sequence is determined according to the training indication information which is mainly used for indicating the duration of the training sequence, and the training data sequence is still the all-zero data sequence. After the local training is completed, the facsimile apparatus of the receiving party sends the CFR/FTT signal to the gateway of the facsimile apparatus of the receiving party. The gateway of the facsimile apparatus of the receiving party demodulates the CFR/FTT signal of the facsimile apparatus of the receiving party and then performs IP encapsulation to the demodulated CFR/FTT signal to obtain the CFR/FTT message, and sends the CFR/FTT message to the gateway of the facsimile apparatus of the sending party. The gateway of the facsimile apparatus of the sending party then modulates the CFR/FTT message to obtain the CFR/FTT signal, and sends the modulated CFR/FTT signal to the facsimile apparatus of the sending party. Thus, the training process of the second time is ended.

A computer readable medium is also provided according to an embodiment of the present invention. The computer readable medium stores instructions executable by a computer, when the instructions are performed by a computer or a processor, the computer or the processor will perform the processes in the steps as shown in Fig.1 and Fig.2, and can preferably perform one or more of the above-mentioned embodiments.

### Device embodiment

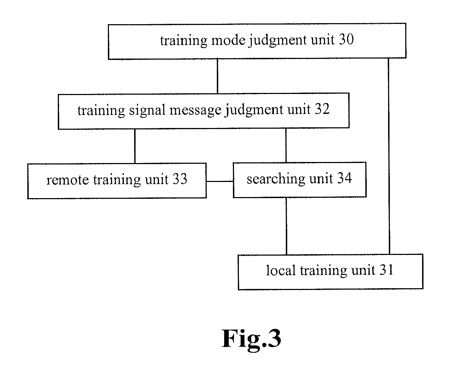

Fig.3 is a schematic diagram of the composition structure of the device for training the IP facsimile apparatus according to an embodiment of the present invention. As shown in Fig.3, the device for training the IP facsimile apparatus comprises a training mode judgment unit 30, a local training unit 31, a training signal message judgment unit 32, a remote training unit 33 and a searching unit 34, wherein the training mode judgment unit 30 is configured to judge, when a gateway of a facsimile apparatus of a receiving party receives a training indication message, a current training mode of the facsimile apparatus of the receiving party, trigger a local training unit 31 if it is judged to be a local training mode, and trigger a training signal message judgment unit 32 if it is judged to be a remote training mode. The local training unit 31 is configured to perform a local training, that is, to generate the training signal according to the training indication message received by the gateway of the facsimile apparatus of the receiving party, and to send the training signal to the facsimile apparatus of the receiving party, so that the facsimile apparatus of the receiving party performs the local training according to the training signal. The training signal message judgment unit 32 is configured to judge whether the gateway of the facsimile apparatus of the receiving party receives a training signal message, trigger a remote training unit 33 if the training signal message is received, and trigger a searching unit 34 if the training signal message is not received. When the facsimile apparatus of the receiving party is in the remote training mode, the facsimile apparatus of the receiving party must perform the remote training according to the received training signal message, and needs to judge whether the training signal message is received. The remote training unit 33 is configured to perform a remote training, that is, when receiving the training signal message, the gateway of the facsimile apparatus of the receiving party analyzes the training signal message, and sends the analyzed training signal to the facsimile apparatus of the receiving party, so that the facsimile apparatus of the receiving party performs the training according to the received training signal. The searching unit 34 is configured to search for a training signal message of the last time, trigger the remote training unit 33 if the training signal message of the last time is found, and trigger the local training unit 31 if the training signal message of the last time is not found. When determining that the gateway of the facsimile apparatus of the receiving party did not receive the training signal message, the searching unit 34 searches whether the gateway of the facsimile apparatus of the receiving party has the previously received training signal message, if yes, the previously received training signal message is analyzed and sent to the facsimile apparatus of the receiving party to make the facsimile apparatus of the receiving party performs the remote training, otherwise the training mode of the facsimile apparatus of the receiving party is changed to the local training mode, the training signal is generated according to the next training indication message received by the gateway of the facsimile apparatus of the receiving party, and is sent to the facsimile apparatus of the receiving party, so that the facsimile apparatus of the receiving party performs the local training according to the training signal.

In the device, when the facsimile apparatus of the receiving party is in the local training mode, the gateway of the facsimile apparatus of the receiving party discards the received training signal message. When the facsimile apparatus of the sending party is in the local training mode, the facsimile apparatus of the sending party only sends the training indication message to the gateway of the facsimile apparatus of the receiving party through the gateway of the facsimile apparatus of the sending party, and does not send the training signal message. Communication between the gateway of the facsimile apparatus of the receiving party and the gateway of the facsimile apparatus of the sending party is performed based on an IP protocol.

After receiving the training indication message, the gateway of the facsimile apparatus of the receiving party unpacks and re-modulates the training indication message to obtain the training indication signal, sends the training indication signal to the facsimile apparatus of the receiving party, and starts to modulate the generated training data sequence to the facsimile apparatus of the receiving party. Herein, the training data sequence is determined according to the training indication information which is mainly used for indicating the duration of the training sequence, and the training data sequence is still the all-zero data sequence. After the local training is completed, the facsimile apparatus of the receiving party sends the CFR/FTT signal to the gateway of the facsimile apparatus of the receiving party. The gateway of the facsimile apparatus of the receiving party demodulates the CFR/FTT signal of the facsimile apparatus of the receiving party and then performs IP encapsulation to the demodulated CFR/FTT signal to obtain the CFR/FTT message, and sends the CFR/FTT message to the gateway of the facsimile apparatus of the sending party. The gateway of the facsimile apparatus of the sending party then modulates the CFR/FTT message to obtain the CFR/FTT signal, and sends the modulated CFR/FTT signal to the facsimile apparatus of the sending party. Thus, the training process of the second time is ended.

The solutions provided by the embodiment of the present invention are compatible with the configuration of various training modes, and ensure the smooth transmission of the facsimile documents between IP facsimile apparatuses.

In addition, the realization of the present invention does not alter the system architecture and the current treatment process, which is easy to be realized, and can be conveniently popularized in the technical field, thus has strong industrial applicability.

The descriptions above are only preferred embodiments of the present invention, which are not used to limit the scope of protection of the present invention.

## Claims

1. A method for training an IP facsimile apparatus, **characterized by** comprising:
when receiving a training indication message, a gateway of a facsimile apparatus of a receiving party judging a current training mode of the facsimile apparatus of the receiving party, if it is judged to be a local training mode, performing a local training; if it is judged to be a remote training mode, performing a remote training when a training signal message is received, searching for a training signal message of a last time when the training signal message is not received, if the training signal message of the last time is found, performing the remote training, if the training signal message of the last time is not found, performing the local training.

2. The method according to claim 1, **characterized in that** the step of performing the local training if the training signal message of the last time is not found comprises: switching the facsimile apparatus of the receiving party to the local training mode, generating, when receiving a training indication message of a next time, a training signal according to the training indication message, sending the training signal to the facsimile apparatus of the receiving party, and the facsimile apparatus of the receiving party performing the local training according to the training signal.

3. The method according to claim 1 or 2, **characterized in that** when the facsimile apparatus of the receiving party is in the local training mode, the gateway of the facsimile apparatus of the receiving party discards the received training signal message.

4. The method according to claim 1, **characterized in that** when a facsimile apparatus of a sending party is in the local training mode, the facsimile apparatus of the sending party only sends a training indication message to the gateway of the facsimile apparatus of the receiving party through a gateway of the facsimile apparatus of the sending party, and does not send any training signal message.

5. The method according to claim 1, **characterized in that** communication between the gateway of the facsimile apparatus of the receiving party and the gateway of the facsimile apparatus of the sending party is performed based on an IP protocol.

6. A device for training an IP facsimile apparatus, **characterized by**, comprising:
a training mode judgment unit, configured to judge, when a gateway of a facsimile apparatus of a receiving party receives a training indication message, a current training mode of the facsimile apparatus of the receiving party, trigger a local training unit if it is judged to be a local training mode, and trigger a training signal message judgment unit if it is judged to be a remote training mode;
the local training unit, configured to perform a local training;
the training signal message judgment unit, configured to judge whether the gateway of the facsimile apparatus of the receiving party receives a training signal message, trigger a remote training unit if the training signal message is received, and trigger a searching unit if the training signal message is not received;
the remote training unit, configured to perform a remote training; and
the searching unit, configured to search for a training signal message of a last time, trigger the remote training unit if the training signal message of the last time is found, and trigger the local training unit if the training signal message of the last time is not found.

7. The device according to claim 6, **characterized in that** the local training unit performs the local training in the following way: generating a training signal according to the training indication message, sending the training signal to the facsimile apparatus of the receiving party, and the facsimile apparatus of the receiving party performing the local training according to the training signal.

8. The device according to claim 6 or 7, **characterized in that** when the facsimile apparatus of the receiving party is in the local training mode, the gateway of the facsimile apparatus of the receiving party discards the received training signal message.

9. The device according to claim 6, **characterized in that** when a facsimile apparatus of a sending party is in the local training mode, the facsimile apparatus of the sending party only sends a training indication message to the gateway of the facsimile apparatus of the receiving party through a gateway of the facsimile apparatus of the sending party, and does not send any training signal message.

10. The device according to claim 6, **characterized in that** communication between the gateway of the facsimile apparatus of the receiving party and the gateway of the facsimile apparatus of the sending party is performed based on an IP protocol.
